# EUROPÄISCHE PATENTSCHRIFT

(11) **EP 0 971 161 B1**
(45) Veröffentlichungstag und Bekanntmachung des Hinweises auf die Patenterteilung: **19.10.2005**
(21) Anmeldenummer: 99890037.7
(22) Anmeldetag: 03.02.1999
(51) Int. Cl.: F16L 23/14, F24F 13/02

(54) **Eckverbindung für die abgekanteten Wandflansche eines im Querschnitt rechwinkeligen Blechkanalschusses**
Corner connection for the folded over flanges of a rectangular cross -section, metal sheet duct
Raccord d angle pour les brides pliées d'un tuyau à section carrée en tôle

(30) Priorität: 08.07.1998 AT 117798
(43) Veröffentlichungstag der Anmeldung: 12.01.2000
(73) Patentinhaber: Leopold Aumayr Gesellschaft m.b.H. & Co. KG, 4221 Steyregg (AT)
(72) Erfinder: Aumayr, Leopold, 4210 Gallneukirchen (AT)
(74) Vertreter: Hübscher, Helmut

(56) Entgegenhaltungen:
- DE-C- 3 340 503
- US-A- 3 923 326
- US-A- 5 423 576
- US-A- 5 564 758

## Beschreibung

Die Erfindung bezieht sich auf eine Eckverbindung für die abgekanteten Wandflansche eines im Querschnitt rechtwinkeligen Blechkanalschusses mit Eckwinkeln, die den zwischen den Wandflanschen freibleibenden Zwickelbereich überbrücken und mit ihren Schenkeln in die ein Hohlprofil bildenden, seitlich offenen Wandflansche eingreifen, wobei die Schenkel der Eckwinkel im Zwickelbereich zwischen den Wandflanschen überlappt und im Überlappungsbereich miteinander verbunden sind.

Um die einzelnen Schüsse eines Blechkanales, beispielsweise einer Belüftungseinrichtung, miteinander zu verbinden, werden diese Kanalschüsse stirnseitig mit Flanschen versehen, die durch ein stirnseitiges Einschneiden der Kanalschüsse entlang der Kanalkanten und einer Abkantung der dadurch erhaltenen Randstreifen der Kanalwände geformt werden. Da zwischen diesen abgewinkelten Wandflanschen Zwickelbereiche freibleiben, müssen die Wandflansche über die freibleibenden Zwickelbereiche miteinander verbunden werden, um ausreichende Festigkeitsverhältnisse zu schaffen. Zu diesem Zweck werden Eckwinkel eingesetzt, deren Schenkel in die ein seitlich offenes Hohlprofil bildenden Wandflansche eingreifen. Einstückige Eckwinkel können allerdings nicht nachträglich über den Zwickelbereich zwischen den Wandflanschen in diese eingesteckt werden. Aus diesem Grunde wurde bereits vorgeschlagen (EP 0 141 306 A1), Eckwinkel mit voneinander getrennten Winkelschenkeln einzusetzen, so daß diese Winkelschenkel nacheinander in die Hohlprofile der Wandflansche eingetrieben werden können. Der eine Winkelschenkel bildet dabei eine Führung für den anderen Winkelschenkel, wodurch eine rechtwinkelige Ausrichtung der beiden Schenkel gewahrt werden soll. In einer anschlagbegrenzten Endstellung weisen die beiden Winkelschenkel in ihrem Überlappungsbereich sich deckende Durchtrittsöffnungen für eine Verbindungsschrauben auf, über die nach dem Eintreiben der Winkelschenkel in die Hohlprofile die Winkelschenkel gegeneinander festgelegt werden. Nachteilig bei dieser bekannten Eckverbindung ist allerdings, daß zwei voneinander unterschiedlich geformte Winkelschenkel vorgesehen werden müssen, die in einer vorgegebenen Reihenfolge in die hohlen Wandschenkel eingetrieben werden müssen, bevor sie über eine mit einer Gegenmutter zusammenwirkende Verbindungsschraube gegeneinander fixiert werden können.

Der Erfindung liegt somit die Aufgabe zugrunde, eine Eckverbindung der eingangs geschilderten Art mit einfachenen konstruktiven Mitteln so auszugestalten, daß gleich geformte Winkelschenkel eingesetzt werden können, die in einer Vormontage miteinander verbunden werden können, so daß es möglich wird, beide Schenkel des Eckwinkels gemeinsam in die zugehörigen Wandflansche einzutreiben.

Die Erfindung löst die gestellte Aufgabe dadurch, daß die Schenkel der Eckwinkel um eine zur Winkelebene senkrechte Achse miteinander gelenkig verbunden sind und je eine von der Stirnseite des freien Schenkelendes zur inneren Längskante verlaufende, mit der äußeren Kanalkante zwischen den Wandflanschen zusammenwirkende Anlaufbahn aufweisen.

Durch die gelenkige Verbindung der beiden Winkelschenkel können diese gegeneinander verschwenkt werden, wobei sich in der Deckungslage zufolge der vorgesehenen Anlaufbahnen, die von der Stirnseite der freien Enden zu den inneren Längskanten hin verlaufen, zwischen den beiden Schenkeln ein V-förmiger Einschnitt im Bereich der einzutreibenden Stirnseiten ergibt. In diesen Einschnitt greift die äußere Kanalkante zwischen den Wandflanschen ein, wenn die Schenkel diagonal zum Zwickelbereich in die Wandflansche eingeführt werden. Beim Eintreiben der Winkelschenkel in die hohlen Wandflansche, z. B. durch Hammerschläge auf das Verbindungsende der beiden Winkelschenkel, werden die Winkelschenkel durch die äußere Kanalkante zwischen den Wandflanschen entlang der Anlaufbahnen auseinandergedrückt und in die Hohlprofile der Wandflansche eingeschoben, bis die äußeren Längskanten der Winkelschenkel an den Außenkanten der Hohlprofile anliegen. In dieser Anschlagstellung bilden die Winkelschenkel einen rechtwinkeligen Eckwinkel, der die Wandflansche unter einer ausreichenden Aussteifung verbindet, ohne daß eine zusätzliche Schraubverbindung der Winkelschenkel notwendig wäre. Da die Winkelschenkel symmetrisch zu einer Winkelsymmetrale des Eckwinkels ausgebildet sein können, können die einzelnen Winkelschenkel aus übereinstimmenden Teilen bestehen, weil sie lediglich um eine Längsachse um 180° gewendet miteinander gelenkig verbunden zu werden brauchen.

Obwohl die gelenkige Verbindung der beiden Schenkel der Eckwinkel konstruktiv unterschiedlich gelöst werden kann, ergeben sich besonders einfache Konstruktionsverhältnisse, wenn die beiden Schenkel der Eckwinkel durch eine Niete miteinander gelenkig verbunden werden. Diese Nietverbindung macht es außerdem möglich, die Schenkel der Eckwinkel nach ihrem Einführen in die Wandflansche miteinander drehfest zu verbinden, weil zu diesem Zweck die Niete lediglich über eine Nietzange od. dgl. mit einer entsprechenden Nietkraft beaufschlagt werden muß.

Um eine zusätzliche Halterung der Winkelschenkel im Hohlprofil der Wandflansche zu erreichen, können die Schenkel der Eckwinkel an ihrem freien Ende eine nach außen vorstehende Kralle bilden, die sich beim Auseinandertreiben der Winkelschenkel während des Einschlagens des Eckwinkels in die Außenkante des Wandflansches einpreßt. Eine weitere Möglichkeit einer Verbindung zwischen den Winkelschenkeln und den Wandflanschen besteht darin, daß die Schenkel der Eckwinkel eine Durchtrittsöffnung aufweisen, in die ein Wandabschnitt der Wandschenkel einpreßbar ist. Die nach dem Eintreiben des Eckwinkels in die Wand- flansche mit Hilfe eines Stempels in die Durchtrittsöffnungen der Schenkel eingepreßten Wandabschnitte der Wandschenkel verhindern ebenfalls eine Längsverschiebung der Winkelschenkel innerhalb der Wandflansche.

In der Zeichnung ist der Erfindungsgegenstand beispielsweise dargestellt. Es zeigen
- Fig. 1: eine Erfindungsgemäße Eckverbindung für die abgekanteten Wandflansche eines im Querschnitt rechtwinkeligen Blechkanalschusses in einer zum Teil aufgerissenen Draufsicht,
- Fig. 2: eine der Fig. 1 entsprechende Darstellung einer Eckverbindung während des Eintreibens des Eckwinkels in die Wandflansche und
- Fig. 3: einen Schnitt nach der Linie III-III der Fig. 1.

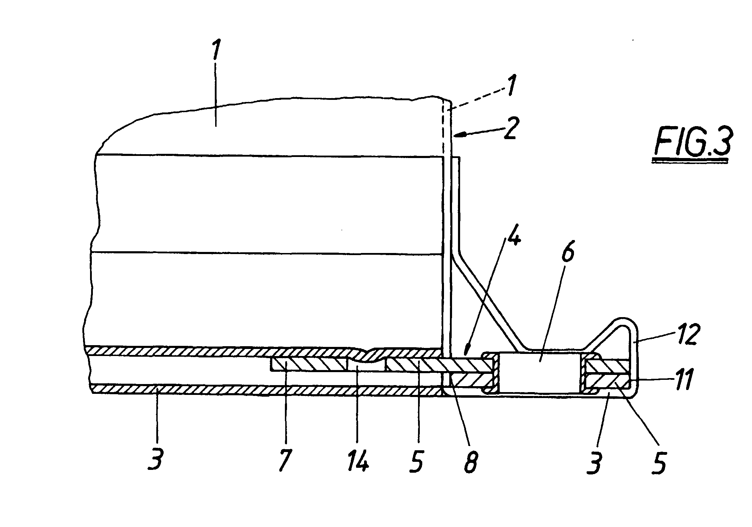

Der lediglich in einem Eckbereich dargestellte Blechkanalschuß weist Wände 1 auf, die sich in einer Kanalkante 2 treffen. An der Stirnseite bildet der Kanalschuß abgewinkelte Wandflansche 3, die durch abgekantete und gegen die Kanalwände 1 zurückgebogene Randstreifen der Kanalwände 1 gebildet werden, wie dies insbesondere der Fig. 3 entnommen werden kann. Die Wandflansche 3 ergeben somit ein Hohlprofil, das gegen den zwischen den Randflanschen 3 freibleibenden Zwickelbereich hin offen ist. Dieser Zwickelbereich wird durch einen Eckwinkel 4 überbrückt, dessen Schenkel 5 miteinander gelenkig verbunden sind, und zwar mit Hilfe einer Niete 6, deren Achse senkrecht auf die Winkelebene steht.

Die Winkelschenkel 5 weisen eine von der Stirnseite des freien Schenkelendes 7 zur inneren Längskante 8 verlaufende Anlaufbahn 9 auf, die mit der äußeren Kanalkante 2 zusammenwirkt.

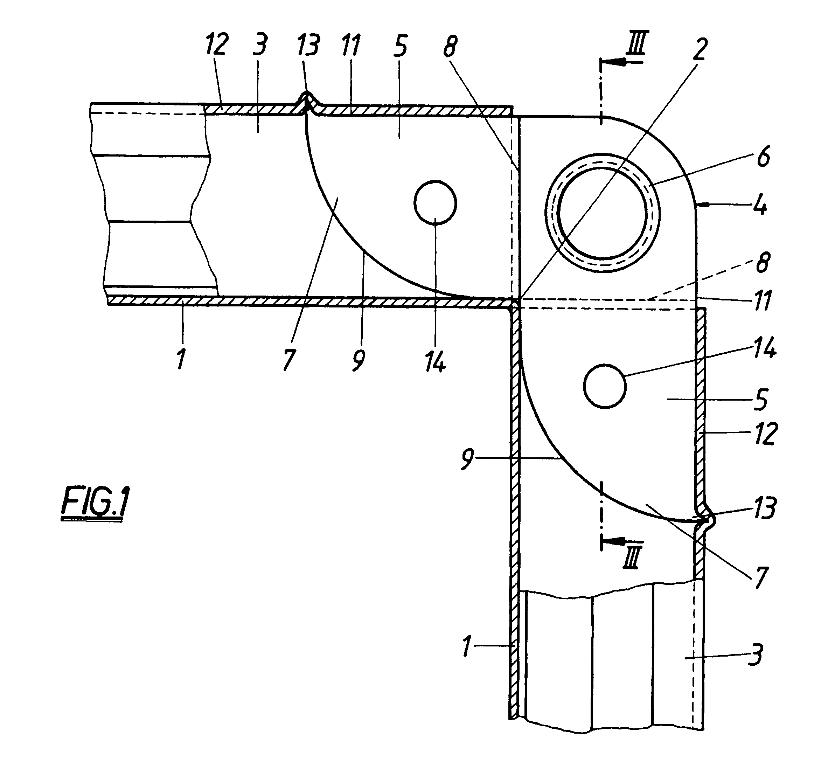

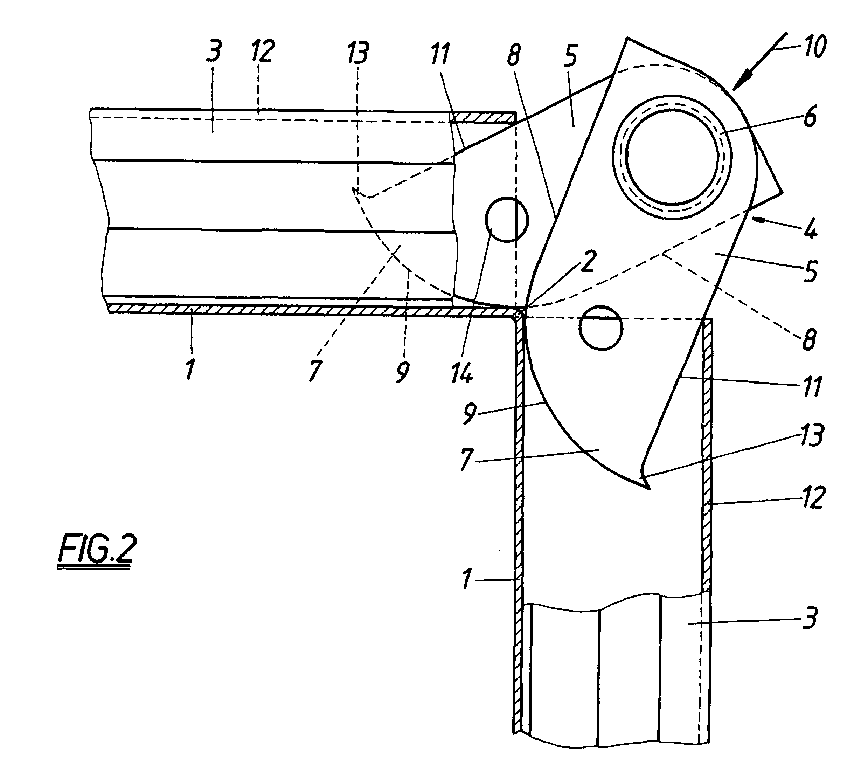

Aufgrund der gelenkigen Verbindung können die beiden Winkelschenkel 5 gegeneinander verschwenkt werden, wobei sich im Bereich der Stirnseiten der freien Enden 7 zufolge der Anlaufbahnen 9 ein V-förmiger Einschnitt zwischen den Winkelschenkeln 5 ergibt, wie dies der Fig. 2 entnommen werden kann. In diesen V-förmigen Einschnitt kommt die äußere Kanalkante 2 zu liegen, wenn der Eckwinkel 4 mit gegeneinander geschwenkten Schenkeln 5 etwa in Richtung der Diagonale des Zwickelbereiches zwischen den beiden Wandflanschen 3 in diese eingetrieben wird, wie dies durch den Pfeil 10 angedeutet wird, in dessen Richtung der Eckwinkel 4 in die hohlen Wandflansche 3 eingetrieben wird. Die in den V-förmigen Einschnitt zwischen den beiden Winkelschenkeln 5 eingreifende äußere Kanalkante 2 bewirkt ein Auseinanderschwenken der Winkelschenkel 5, die gleichzeitig in die Hohlprofile der Wandflansche 3 eingetrieben werden, bis die äußeren Längskanten 11 der Winkelschenkel 5 an den äußeren Längskanten 12 der Wandflansche 3 anliegen. Da die Winkelschenkel 5 an ihrem freien Ende 7 eine nach außen vorstehende Kralle 13 bilden, dringt diese Kralle 13 in die äußere Längskante 12 der Wandflansche 3 ein, wie dies in der Fig. 1 angedeutet ist. Damit wird eine zusätzliche Halterung der Winkelschenkel 5 in den Wandflanschen 3 erreicht. Zusätzlich können die Winkelschenkel 5 mit Durchtrittsöffnungen 14 versehen sein, in die ein Wandabschnitt der Wandflansche 3 mit Hilfe eines Stempels oder Körners eingedrückt werden kann. In der Fig. 3 ist dieser Fall eingezeichnet. Durch diese Maßnahme wird eine formschlüssige Verbindung zwischen den Winkelschenkeln 5 und den Wandflanschen 3 erzielt, die einen sicheren Halt der Winkelschenkel 5 innerhalb der hohlen Wandflansche 3 gewährleistet.

Schließlich ist zu erwähnen, daß durch ein Nachpressen der Niete 6 des in die Wandflansche 3 eingetriebenen Eckwinkels 4 eine drehfeste Verbindung zwischen den Winkelschenkeln 5 hergestellt werden kann, um besonders hohen Festigkeitsanforderungen zu entsprechen.

Aufgrund der zur Winkelsymmetrale des Eckwinkels 4 symmetrischen Ausbildung der beiden Winkelschenkel 5 können diese als deckungsgleiche Formstücke aus einem Bleck ausgestanzt werden, so daß zur Fertigung des Eckwinkels 4 lediglich eines dieser Formstücke um seine Längsachse um 180° gewendet werden muß, bevor die beiden Formstücke miteinander zum Eckwinkel gelenkig verbunden werden. Der vormontierte Eckwinkel 4 stellt somit einen wenig aufwendigen Konstruktionsteil dar, der außerdem in vorteilhafter Weise eine gemeinsame Montage der beiden Winkelschenkel 5 erlaubt, so daß die Montagezeit erheblich herabgesetzt werden kann, zumal eine nachträgliche Verbindung der Winkelschenkel 5 entfällt. Dazu kommt noch, daß durch die gelenkige Verbindung der Winkelschenkel 5 Winkelfehler zwischen den Wandflanschen 3 ohne weiteres ausgeglichen werden können. Um ein Auseinandertreiben der Winkelschenkel 5 über einen vorgegebenen Grenzwinkel zu vermeiden, können außerdem die Winkelschenkel 5 gegenseitige Drehanschläge aufweisen.

## Patentansprüche

1. Eckverbindung für die abgekanteten Wandflansche (3) eines im Querschnitt rechtwinkeligen Blechkanalschusses mit Eckwinkeln (4), die den zwischen den Wandflanschen (3) freibleibenden Zwickelbereich überbrücken und mit ihren Schenkeln (5) in die ein Hohlprofil bildenden, seitlich offenen Wandflansche (3) eingreifen, wobei die Schenkel (5) der Eckwinkel (4) im Zwickelbereich zwischen den Wandflanschen (3) überlappen und im Überlappungsbereich miteinander verbunden sind, **dadurch gekennzeichnet, daß** die Schenkel (5) der Eckwinkel (4) um eine zur Winkelebene senkrechte Achse miteinander gelenkig verbunden sind und je eine von der Stirnseite des freien Schenkelendes (7) zur inneren Längskante (8) verlaufende, mit der äußeren Kanalkante (2) zwischen den Wandflanschen (3) zusammenwirkende Anlaufbahn (9) aufweisen.

2. Eckverbindung nach Anspruch 1, **dadurch gekennzeichnet, daß** die beiden Schenkel (5) der Eckwinkel (4) durch eine Niete (6) miteinander gelenkig verbunden sind.

3. Eckverbindung nach Anspruch 2, **dadurch gekennzeichnet, daß** die Schenkel (5) der Eckwinkel (4) nach ihrem Einführen in die Wandflansche (3) über die Niete (6) miteinander drehfest verbindbar sind.

4. Eckverbindung nach einem der Ansprüche 1 bis 3, **dadurch gekennzeichnet, daß** die Schenkel (5) der Eckwinkel (4) an ihrem freien Ende (7) eine nach außen vorstehende Kralle (13) bilden.

5. Eckverbindung nach einem der Ansprüche 1 bis 4, **dadurch gekennzeichnet, daß** die Schenkel (5) der Eckwinkel (4) eine Durchtrittsöffnung (14) aufweisen, in die ein Wandabschnitt der Wandschenkel (3) einpreßbar ist.

## Claims

1. Corner joint for the wall flanges (3) bent at an angle of a sheet metal pipe section with right-angled cross-section with corner angles (4) which bridge the gusset zone remaining free between the wall flanges (3) and engage with their legs (5) into the wall flanges (3) open to the side and forming a hollow profile wherein the legs (5) of the corner angles (4) overlap in the gusset zone between the wall flanges (3) and are connected to each other in the overlap area, **characterised in that** the legs (5) of the corner angles (4) are linked to each other about an axis perpendicular to the angle plane and have a path (9) running from the end side of the free leg end (7) to the inner longitudinal edge (8) and cooperating with the outer pipe edge (2) between the wall flanges (3).

2. Corner joint according to claim 1, **characterised in that** the two legs (5) of the corner angles (4) are linked to each other through a rivet (6).

3. Corner joint according to claim 2, **characterised in that** the legs (5) of the corner angles (4), after being inserted into the wall flanges (3), are designed to be connected to each other in a rotationally secure way through the rivet (6).

4. Corner joint according to one of the claims 1 to 3, **characterised in that** the legs (5) of the corner angles (4) form an outwardly projecting claw (13) at their free end (7).

5. Corner joint according to one of the claims 1 to 4, **characterised in that** the legs (5) of the corner angles (4) have a through opening (14), into which a wall section of the wall legs (3) is designed to be pressed.

## Revendications

1. Raccord d'angle pour les brides pliées (3), pliées à arêtes vives d'un tronçon de canal en tôle à section transversale rectangulaire, avec des angles de coin (4), pontant la zone en gousset restant libre entre les brides pliées (3) et s'engageant, par leurs branches (5), dans les brides pliées (3), ouvertes latéralement, formant un profilé creux, les branches (5) des angles de coin (4) étant reliées étant chevauchées, dans la zone en gousset située entre les brides pliées (3), et étant reliées ensemble dans la zone de chevauchement, **caractérisé en ce que** les branches (5) des angles de coin (4) sont reliées ensemble de façon articulée, autour d'un axe perpendiculaire au plan d'angle, et présentent chacune une piste de franchissement (9), s'étendant de la face frontale de l'extrémité de branche (7) libre vers l'arête longitudinale (8) intérieure et coopérant avec l'arête de canal (2) extérieure, entre les brides pliées (3).

2. Raccord d'angle selon la revendication 1, **caractérisé en ce que** les deux branches (5) des angles de coin (4) sont reliées ensemble de façon articulée par un rivet (6).

3. Raccord d'angle selon la revendication 2, **caractérisé en ce que** les deux branches (5) des angles de coin (4) sont susceptibles d'être reliés ensemble de façon assujettie en rotation, après leur insertion dans les brides pliées (3), par l'intermédiaire des rivets (6).

4. Raccord d'angle selon l'une des revendications 1 à 3, **caractérisé en ce que** les branches (5) des angles de coin (4) forment, sur leurs extrémités (7) libres, une griffe (13) faisant saillie vers l'extérieur.

5. Raccord d'angle selon l'une des revendications 1 à 4, **caractérisé en ce que** les branches (5) des angles de coin (4) présentent une ouverture de passage (14), dans laquelle est susceptible d'être enfoncé un tronçon de paroi des brides pliées (3).
